(19)

**Europäisches Patentamt**

**European Patent Office**

**Office européen des brevets**

(11) **EP 4 075 744 A1**

(12) **EUROPEAN PATENT APPLICATION**
published in accordance with Art. 153(4) EPC

(43) Date of publication:
**19.10.2022 Bulletin 2022/42**

(21) Application number: **20898738.8**

(22) Date of filing: **04.11.2020**

(51) International Patent Classification (IPC):
**H04L 25/02** $^{(2006.01)}$

(52) Cooperative Patent Classification (CPC):
**H04B 17/345; H04L 25/02**

(86) International application number:
**PCT/CN2020/126453**

(87) International publication number:
**WO 2021/114964 (17.06.2021 Gazette 2021/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.12.2019 CN 201911253693**

(71) Applicant: **ZTE Corporation
Shenzhen, Guangdong 518057 (CN)**

(72) Inventors:
• **WEI, Hao
Shenzhen, Guangdong 518057 (CN)**
• **REN, Kaijun
Shenzhen, Guangdong 518057 (CN)**
• **HUANG, Jingyue
Shenzhen, Guangdong 518057 (CN)**
• **LI, Ping
Shenzhen, Guangdong 518057 (CN)**
• **LI, Jie
Shenzhen, Guangdong 518057 (CN)**

(74) Representative: **Petraz, Gilberto Luigi et al
GLP S.r.l.
Viale Europa Unita, 171
33100 Udine (IT)**

(54) **SIGNAL DETECTION METHOD AND APPARATUS, COMMUNICATION DEVICE, AND COMPUTER STORAGE MEDIUM**

(57) The embodiments of the present invention provide a signal detection method and apparatus, a communication device and a computer storage medium. After detecting a signal $y_{data}$ at a data position included in a received signal $y$ based on a channel estimation matrix aa and an interference-plus-noise covariance matrix bb to obtain a current estimated value cc of data symbol, the following iterative process can be performed cyclically according to a preset iterative detection condition: a preset pilot symbol $s_{pilot}$ is updated based on the currently obtained cc, and a preset pilot position signal $y_{iter}$ is updated based on $y_{pilot}$ and a signal $y_{data}$ at a pilot position included in $y$; and based on the aa and bb acquired according to the updated $s_{pilot}$ and $y_{iter}$, and based on the newly acquired aa and bb, the $y_{data}$ is redetected to obtain the currently newest cc.

Fig. 1

**Description**

**Field of the Invention**

Embodiments of the present invention relate to, but are not limited to, the field of communications, and more specifically relate to, but are not limited to, a signal detection method and apparatus, a communication device and a computer storage medium.

**Background of the Invention**

With the increasing shortage of spectrum resources and the sustainable increase of wireless data traffic, a frequency reuse technology has become an important factor for propelling new revolutions in wireless communication systems. The frequency reuse technology can improve spectrum utilization, but inevitably leads to signal interference. In uplink communication, user signals in the cell will be interfered by user signals of neighboring cells when reaching a base station, and in downlink communication, the user signals in the cell will be interfered by signals from base stations of the neighboring cells. Therefore, inter-cell co-channel interference has always been a concern in wireless communication system research.

In the related art, the solutions in the industry for reducing interference mainly include inter-cell interference coordination, inter-cell interference randomisation, inter-cell interference cancellation, etc. A receiving end can perform signal detection based on the corresponding receiver algorithm by using a channel estimation matrix and an interference-plus-noise covariance matrix calculated from a received signal. However, due to the influence of an interference signal, the error of the channel estimation matrix and the interference-plus-noise covariance matrix calculated from the received signal is relatively large, which leads to the low accuracy of an output detection result of signal detection based on the channel estimation matrix and the interference-plus-noise covariance matrix, and in turn affects the performance of a receiver.

**Summary of the Invention**

The present invention provides a signal detection method and apparatus, a communication device and a computer readable storage medium to solve the problem in the related art that signal detection is affected by interference signals and thus the accuracy of a detection result is low.

In order to solve the above problem, an embodiment of the invention provides a signal detection method, including: conducting channel estimation based on a preset pilot symbol $\mathbf{s}_{pilot}$ and a preset pilot position signal $\mathbf{y}_{iter}$ to obtain a channel estimation matrix $\hat{\mathbf{H}}$, the preset pilot position signal $\mathbf{y}_{iter}$ being a signal $\mathbf{y}_{pilot}$ at a pilot position included in a received signal $\mathbf{y}$; conducting iterative reconstruction based on the channel estimation matrix $\hat{\mathbf{H}}$ and the preset pilot position signal $\mathbf{y}_{iter}$ to obtain an interference-plus-noise covariance matrix $\hat{\mathbf{R}}_{nn}$; detecting a signal $\mathbf{y}_{data}$ at a data position included in the received signal $\mathbf{y}$ based on the channel estimation matrix $\hat{\mathbf{H}}$ and the interference-plus-noise covariance matrix $\hat{\mathbf{R}}_{nn}$ to obtain a current estimated value $\hat{\mathbf{s}}_{data}$ of data symbol. After obtaining the current estimated value $\hat{\mathbf{s}}_{data}$ of data symbol and when it is determined according to a preset iterative detection condition that current iterative detection has not been completed, the following steps are cyclically performed until it is determined according to the iterative detection condition that the current iterative detection has been completed, and then a currently obtained newest estimated value $\hat{\mathbf{s}}_{data}$ of data symbol is output. The following steps including that: the preset pilot symbol $\mathbf{s}_{pilot}$ is updated based on the current estimated value $\hat{\mathbf{s}}_{data}$ of data symbol, and the preset pilot position signal $\mathbf{y}_{iter}$ is updated based on the signal $\mathbf{y}_{pilot}$ at the pilot position and the signal $\mathbf{y}_{data}$ at the data position; based on the updated preset pilot symbol $\mathbf{s}_{pilot}$ and the updated preset pilot position signal $\mathbf{y}_{iter}$, a new channel estimation matrix $\hat{\mathbf{H}}$ and the interference-plus-noise covariance matrix $\hat{\mathbf{R}}_{nn}$ is acquired; and based on the acquired new channel estimation matrix $\hat{\mathbf{H}}$ and the interference-plus-noise covariance matrix $\hat{\mathbf{R}}_{nn}$, the signal $\mathbf{y}_{data}$ at the data position is redetected using a set receiver algorithm to obtain a currently newest estimated value $\hat{\mathbf{s}}_{data}$ of data symbol.

In order to solve the above problem, an embodiment of the invention provides a signal detection apparatus, including: an acquisition module, arranged to, conduct channel estimation based on a preset pilot symbol $\mathbf{s}_{pilot}$ and a preset pilot position signal $\mathbf{y}_{iter}$ to obtain a channel estimation matrix $\hat{\mathbf{H}}$, and conduct iterative reconstruction based on the channel estimation matrix $\hat{\mathbf{H}}$ and the preset pilot position signal $\mathbf{y}_{iter}$ to obtain an interference-plus-noise covariance matrix $\hat{\mathbf{R}}_{nn}$; a detection module, arranged to, detect a signal $\mathbf{y}_{data}$ at a data position included in the received signal $\mathbf{y}$ using a set receiver algorithm based on the channel estimation matrix $\hat{\mathbf{H}}$ and the interference-plus-noise covariance matrix $\hat{\mathbf{R}}_{nn}$ to obtain a current estimated value $\hat{\mathbf{s}}_{data}$ of data symbol; and arranged to, after obtaining the current estimated value $\hat{\mathbf{s}}_{data}$ of data symbol and when it is determined according to a preset iterative detection condition that current iterative detection has not been completed, perform the following steps cyclically until it is determined according to the iterative detection condition that the current iterative detection has been completed, and then output a currently obtained

newest estimated value $\hat{\mathbf{s}}_{data}$ of data symbol. The following steps including that: the preset pilot symbol $\mathbf{s}_{pilot}$ is updated based on the current estimated value $\hat{\mathbf{s}}_{data}$ of data symbol, and the preset pilot position signal $\mathbf{y}_{iter}$ is updated based on the signal $\mathbf{y}_{pilot}$ at the pilot position and the signal $\mathbf{y}_{data}$ at the data position; based on the updated preset pilot symbol $\mathbf{s}_{pilot}$ and the updated preset pilot position signal $\mathbf{y}_{iter}$, a new channel estimation matrix $\hat{\mathbf{H}}$ and the interference-plus-noise covariance matrix $\hat{\mathbf{R}}_{nn}$ are acquired, and based on the acquired new channel estimation matrix $\hat{\mathbf{H}}$ and the interference-plus-noise covariance matrix $\hat{\mathbf{R}}_{nn}$, $\mathbf{y}_{data}$ is redetected using the set receiver algorithm to obtain the currently newest estimated value $\hat{\mathbf{s}}_{data}$ of data symbol.

In order to solve the above problem, an embodiment of the invention provides a communication device, including: a processor and a memory. The processor is arranged to execute one or more programs stored in the memory, so as to implement the steps of the signal detection method described above.

In order to solve the above problem, an embodiment of the invention provides a computer storage medium. The computer readable storage medium stores one or more programs that can be executed by the one or more processors, so as to implement steps of the signal detection method described above.

The embodiments of the invention provide a signal detection device and apparatus, a communication device and a computer storage medium. After detecting, based on a channel estimation matrix $\hat{\mathbf{H}}$ and an interference-plus-noise covariance matrix $\hat{\mathbf{R}}_{nn}$, a signal $\mathbf{y}_{data}$ at a data position included in a received signal $\mathbf{y}$ to obtain a current estimated value $\hat{\mathbf{s}}_{data}$ of data symbol, the following iterative process can be cyclically performed according to a preset iterative detection condition: based on the currently obtained $\hat{\mathbf{s}}_{data}$, a preset pilot symbol $\mathbf{s}_{pilot}$ is updated, and based on $\mathbf{y}_{pilot}$ and a signal Ydata at a pilot position included in $\mathbf{y}$, a preset pilot position signal $\hat{\mathbf{y}}_{iter}$ is updated; and based on the updated $\mathbf{s}_{pilot}$ and $\mathbf{y}_{iter}$, $\hat{\mathbf{H}}$ and $\hat{\mathbf{R}}_{nn}$ are acquired, and based on the acquired new $\hat{\mathbf{H}}$ and $\hat{\mathbf{R}}_{nn}$, the $\mathbf{y}_{data}$ is redetected to obtain a currently newest.

## Brief Description of the Drawings

The present invention will be further illustrated below in conjunction with the accompanying drawings and embodiments. In the accompanying drawings:

Fig. 1 is a basic flow chart of a signal detection method provided by Embodiment 1 of the invention;
Fig. 2 is a basic flow chart of iterative reconstruction of an interference-plus-noise covariance matrix provided by Embodiment 1 of the invention;
Fig. 3 is a schematic structural diagram of a signal detection apparatus provided by Embodiment 2 of the invention;
Fig. 4 is a basic flow chart of a signal detection method provided by Embodiment 2 of the invention; and
Fig. 5 is a schematic structural diagram of a communication device provided by Embodiment 3 of the invention.

## Detailed Description of the Embodiments

In order to make the objective, technical solutions and advantages of the embodiments of the present invention clearer, embodiments of the invention will be illustrated in detail hereinafter by specific implementations in combination with the accompanying drawings. It should be understood that the specific embodiments described herein are only used for explaining the embodiments of the invention instead of limiting them.

Embodiment 1

In terms of the problem in the related art that signal detection is affected by interference signals and thus the accuracy of a detection result is low, the embodiment provides a signal detection method based on iterative detection, which can realize that: based on a previous signal detection result $\hat{\mathbf{s}}_{data}$, a new $\mathbf{s}_{pilot}$ is iteratively generated, and then based on the new $\mathbf{s}_{pilot}$, new $\hat{\mathbf{H}}$ and $\hat{\mathbf{R}}_{nn}$ are generated for iterative detection of a to-be-detected signal so as to eliminate the error influence caused by interference signals, and finally, a more accurate signal detection result is obtained, thereby improving system performance.

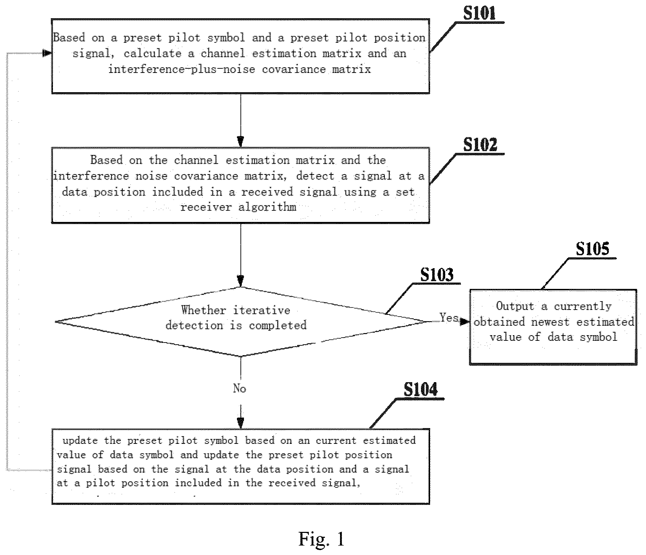

For ease of understanding, the embodiment is illustrated below in conjunction with the signal detection method shown in Fig. 1 as an example. The method includes the followings as shown in Fig. 1:
S101: a channel estimation matrix $\hat{\mathbf{H}}$ and an interference-plus-noise covariance matrix $\hat{\mathbf{R}}_{nn}$ are acquired.

In the embodiment, a received signal $\mathbf{y}$ received by a receiving end includes a signal $\mathbf{y}_{pilot}$ at a pilot position and a signal $\mathbf{y}_{data}$ at a data position. In the embodiment, a preset pilot symbol $\mathbf{s}_{pilot}$ can be set, and the initial preset pilot symbol can be a pilot symbol $\mathbf{s}_{pilot}$ predetermined by both parties of communication in advance, i.e., a $\mathbf{s}_{pilot}$ known by both parties of communication in advance. In the embodiment, a preset pilot position signal $\mathbf{y}_{iter}$ can also be set in advance, and in an example, the initial preset pilot position signal $\mathbf{y}_{iter}$ can be the signal $\mathbf{y}_{pilot}$ at the pilot position included in the received signal $\mathbf{y}$.

In an example of the embodiment, based on the preset pilot symbol $\mathbf{s}_{pilot}$ and the preset pilot position signal $\mathbf{y}_{iter}$, channel estimation is conducted to obtain the channel estimation matrix $\hat{\mathbf{H}}$. Moreover, specific algorithms for obtaining the channel estimation matrix $\hat{\mathbf{H}}$ based on the preset pilot symbol $\mathbf{s}_{pilot}$ and the preset pilot position signal $\mathbf{y}_{iter}$ can be flexibly selected. For example, based on, but not limited to, least square method, the channel estimation matrix $\hat{\mathbf{H}}$ is obtained using the preset pilot symbol $\mathbf{s}_{pilot}$ and the preset pilot position signal $\mathbf{y}_{iter}$.

In some examples of the embodiment, based on the obtained channel estimation matrix $\hat{\mathbf{H}}$ and the signal $\mathbf{y}_{pilot}$ at the pilot position included in the received signal $\mathbf{y}$, iterative reconstruction can be conducted to obtain the interference-plus-noise covariance matrix $\hat{\mathbf{R}}_{nn}$.

S102: based on the acquired channel estimation matrix $\hat{\mathbf{H}}$ and the interference-plus-noise covariance matrix $\hat{\mathbf{R}}_{nn}$, the signal $\mathbf{y}_{data}$ at the data position included in the received signal $\mathbf{y}$ is detected using a set receiver algorithm to obtain a current estimated value $\hat{\mathbf{s}}_{data}$ of data symbol.

It should be understood that when the signal $\mathbf{y}_{data}$ at the data position included in the received signal $\mathbf{y}$ is detected using the set receiver algorithm according to the channel estimation matrix $\hat{\mathbf{H}}$ and the interference-plus-noise covariance matrix $\hat{\mathbf{R}}_{nn}$, the selected receiver algorithm can be flexibly determined according to specific application scenarios. The receiver algorithms can include, but not limited to, some existing algorithms, such as an Interference Rejection Combining (IRC) algorithm, an Enhanced Interference Suppression Combining (IRC) algorithm or a Maximal Ratio Combining (MRC) algorithm.

In this example, based on the acquired channel estimation matrix $\hat{\mathbf{H}}$ and the interference-plus-noise covariance matrix $\hat{\mathbf{R}}_{nn}$, the detection of the signal $\mathbf{y}_{data}$ at the data position included in $\mathbf{y}$ using the set receiver algorithm may use, but not limited to, the following manners to obtain $\hat{\mathbf{s}}_{data}$:

$$\hat{\mathbf{s}}_{data} = \mathbf{W}\,\mathbf{y}_{data}\,;$$

where W in the above formula represents a detection matrix, and in an example, W can be indicated as follows:

$$\mathbf{W} = \left( \hat{\mathbf{H}}^{H} \hat{\mathbf{R}}_{nn}^{-1} \hat{\mathbf{H}} + \mathbf{I} \right)^{-1} \hat{\mathbf{H}}^{H} \hat{\mathbf{R}}_{nn}^{-1}\,;$$

where I in the above formula represents a unit matrix.

S103: whether iterative detection is completed is determined, if yes, proceed to S105; otherwise, proceed to S104.

After obtaining the current estimated value $\hat{\mathbf{s}}_{data}$ of data symbol and when it is determined according to the preset iterative detection condition that iterative detection is needed currently, the following steps are performed cyclically until it is determined according to the iterative detection condition that iterative detection has been completed currently, and then a currently obtained newest $\hat{\mathbf{s}}_{data}$ is output.

S104: based on the current estimated value $\hat{\mathbf{s}}_{data}$ of data symbol, the preset pilot symbol $\mathbf{s}_{pilot}$ is updated, and based on the signal $\mathbf{y}_{pilot}$ at the pilot position and the signal $\mathbf{y}_{data}$ at the data position, the preset pilot position signal $\mathbf{y}_{iter}$ is updated, and then it proceeds to S101.

After proceeding to S101, in S101, based on the updated preset pilot symbol $\mathbf{s}_{pilot}$ and preset pilot position signal $\mathbf{y}_{iter}$, new channel estimation matrix $\hat{\mathbf{H}}$ and interference-plus-noise covariance matrix $\hat{\mathbf{R}}_{nn}$ are acquired, and then it proceeds to S102. In the step of S102, based on the acquired new channel estimation matrix $\hat{\mathbf{H}}$ and interference-plus-noise covariance matrix $\hat{\mathbf{R}}_{nn}$, $\mathbf{y}_{data}$ is redetected using the set receiver algorithm to obtain the currently newest estimated value $\hat{\mathbf{s}}_{data}$ of data symbol, then turning to S103; and the steps are cycled in order until iterative detection has been completed, then turning to S105.

S105: the currently obtained newest estimated value $\hat{\mathbf{s}}_{data}$ of data symbol is output.

In a first application scenario of the embodiment, the steps in Fig. 1 can be performed directly based on the signal $\mathbf{y}_{pilot}$ at the pilot position and the signal $\mathbf{y}_{data}$ at the data position included in the received signal, and the influence caused by the interference signals is eliminated by the iterative detection process in Fig. 1, thereby improving signal detection accuracy. The above step S104 of updating the preset pilot symbol $\mathbf{s}_{pilot}$ based on the current estimated value $\hat{\mathbf{s}}_{data}$ of data symbol and updating the preset pilot position signal $\mathbf{y}_{iter}$ based on the signal $\mathbf{y}_{pilot}$ at the pilot position and the signal $\mathbf{y}_{data}$ at the data position can include that:
based on the current estimated value $\hat{\mathbf{s}}_{data}$ of data symbol, a data symbol $\tilde{\mathbf{s}}_{data}$ is obtained by a hard decision (e.g., a hard decision according to a modulation constellation diagram), the preset pilot symbol $\mathbf{s}_{pilot}$ is updated to $\mathbf{s}_{pilot} = \{\mathbf{s}_{pilot}, \tilde{\mathbf{s}}_{data}\}$ and the signal $\mathbf{y}_{iter}$ at the pilot position is updated to $\mathbf{y}_{iter} = \{\mathbf{y}_{pilot}\ \mathbf{y}_{data}\}$;. Then the above step S101 is reentered using the updated $\mathbf{s}_{pilot}$ and $\mathbf{y}_{iter}$ for the iterative detection process.

In a second application scenario of the embodiment, in order to further eliminate the influence caused by the interference signals, the steps shown in Fig. 1 can be performed after eliminating the interference signals in the signal $\mathbf{y}_{pilot}$ at the pilot position and the signal $\mathbf{y}_{data}$ at the data position included in the received signal. It should be understood that the manner of eliminating the interference signals in the received signal $\mathbf{y}$ can be any manner that can extract at least part of the interference signals. For example, in the embodiment, at least part of the interference signals can be eliminated by projecting the received signal $\mathbf{y}$ into a set subspace. The set subspace in the embodiment can be, but is not limited to, a subspace formed by a set desired signal, and for example can be, but is not limited to, a subspace formed by a singular vector corresponding to K maximum singular values, where K is a positive integer greater than or equal to the number N of data streams sent by a signal sending end ( and the end sending the above received signal y), and the specific value of K can be flexibly set according to specific application scenarios,. It can be set as 1, 2, 4, 5, 6, etc., for example. The received signal includes the signal $\mathbf{y}_{pilot}$ at the pilot position and the signal $\mathbf{y}_{data}$ at the data position, and thus after projecting the received signal y into the set subspace, a projected signal $y^p$ obtained correspondingly includes a signal $\mathbf{y}^p_{pilot}$ at the pilot position and a signal

$$\mathbf{y}^p_{data}$$

at the data position.

In the example where the steps shown in Fig. 1 are performed after eliminating the interference signals in the data $\mathbf{y}_{pilot}$ at the pilot position and the signal $\mathbf{y}_{data}$ at the data position included in the received signal $\mathbf{y}$, the step in Fig. 1 of conducting channel estimation based on the preset pilot symbol $\mathbf{s}_{pilot}$ and the preset pilot position signal $\mathbf{y}_{iter}$ to obtain the channel estimation matrix $\hat{\mathbf{H}}$ and conducting iterative reconstruction based on the channel estimation matrix $\hat{\mathbf{H}}$ and the signal $\mathbf{y}_{pilot}$ at the pilot position to obtain the interference-plus-noise covariance matrix $\hat{\mathbf{R}}_{nn}$ includes that: the pilot position projected signal

$$\mathbf{y}^p_{pilot}$$

obtained by projecting the signal $\mathbf{y}_{pilot}$ at the pilot position included in the received signal $\mathbf{y}$ into the set subspace is used as the preset pilot position signal $\mathbf{y}_{iter}$, and based on the preset pilot position signal $\mathbf{y}_{iter}$ and the preset pilot symbol $\mathbf{s}_{pilot}$, channel estimation is conducted (e.g., using, but not limited to least square method) to obtain the channel estimation matrix $\hat{\mathbf{H}}$; and based on the channel estimation matrix $\hat{\mathbf{H}}$ and the pilot position projected signal

$$\mathbf{y}^p_{pilot},$$

iterative reconstruction is conducted to obtain the interference-plus-noise covariance matrix $\hat{\mathbf{R}}_{nn}$. In the embodiment, the preset pilot position signal $\mathbf{y}_{iter}$ is dynamically changing, and can be updated based on the signal $\mathbf{y}_{pilot}$ at the pilot position and the signal $\mathbf{y}_{data}$ at the data position in the signal iterative detection process described above in the steps of S104 and S105.

In Fig. 1, the step of detecting the signal $\mathbf{y}_{data}$ at the data position included in the received data $\mathbf{y}$ based on the channel estimation matrix $\hat{\mathbf{H}}$ and the interference-plus-noise covariance matrix $\hat{\mathbf{R}}_{nn}$ using the set receiver algorithm includes that: the data position projected signal

$$\mathbf{y}^p_{data}$$

obtained by projecting the signal $\mathbf{y}_{data}$ at the data position included in the received data $\mathbf{y}$ into the set subspace based on the channel estimation matrix $\hat{\mathbf{H}}$ and the interference-plus-noise covariance matrix $\hat{\mathbf{R}}_{nn}$ using the set receiver algorithm is detected. In this detection manner, at least part of the interference signals are also eliminated by subspace projection, thus errors of the obtained channel estimation matrix $\hat{\mathbf{H}}$ and interference-plus-noise covariance matrix $\hat{\mathbf{R}}_{nn}$ can be reduced, thereby ensuring the accuracy of the estimated value $\hat{\mathbf{s}}_{data}$ of data symbol output during signal detection by using the channel estimation matrix $\hat{\mathbf{H}}$ and the interference-plus-noise covariance matrix $\hat{\mathbf{R}}_{nn}$.

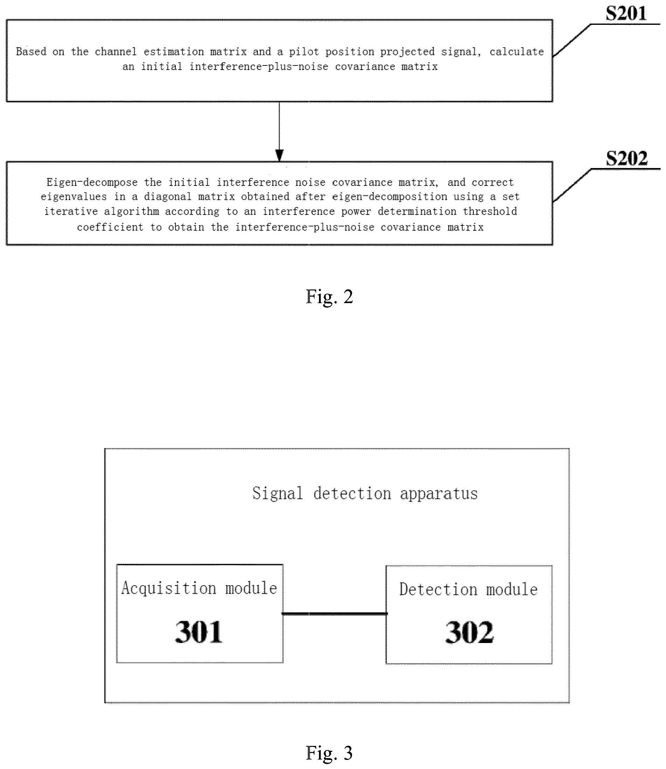

In some examples of the embodiment, for the step of conducting iterative reconstruction based on the channel estimation matrix $\hat{\mathbf{H}}$ and the pilot position projected signal

$$\mathbf{y}^{p}_{pilot}$$

to obtain the interference-plus-noise covariance matrix $\hat{\mathbf{R}}_{nn}$, can include (as shown in Fig. 2) that:

S201: based on the channel estimation matrix $\hat{\mathbf{H}}$ and the pilot position projected signal

$$\mathbf{y}^{p}_{pilot},$$

the initial interference-plus-noise covariance matrix $\hat{\mathbf{R}}_{nn}$ is calculated. The specific calculation manner can be any manner that the initial interference-plus-noise covariance matrix $\hat{\mathbf{R}}_{nn}$ can be generated by the channel estimation matrix $\hat{\mathbf{H}}$ and the pilot position projected signal

$$\mathbf{y}^{p}_{pilot},$$

which is not described in detail herein.

S202: the initial interference-plus-noise covariance matrix $\hat{\mathbf{R}}_{nn}$ is eigen-decomposed, and eigenvalues in a diagonal matrix $\tilde{\Sigma}$ obtained after eigen-decomposition of the $\tilde{\mathbf{R}}_{00}$ are modified according to an interference power determination threshold coefficient $\eta$ by using a set iterative algorithm to obtain an interference-plus-noise covariance matrix $\hat{\mathbf{R}}_{nn}$, where the interference power determination threshold coefficient $\eta$ is a positive real number greater than 0. It can be flexibly set according to specific application situations. For example, it can be set as larger than 0, less than or equal to 3, or an arbitrary value greater than or equal t 1 and less than or equal to 3.

In an example of the embodiment, the above S202 of Eigen-decomposing the initial interference-plus-noise covariance matrix $\hat{\mathbf{R}}_{nn}$ and correcting the eigenvalues in the diagonal matrix $\tilde{\Sigma}$ obtained after Eigen-decomposition of the $\tilde{\mathbf{R}}_{00}$ using the set iterative algorithm according to the interference power determination threshold coefficient $\eta$ to obtain the interference-plus-noise covariance matrix $\hat{\mathbf{R}}_{nn}$ can include, but is not limited to, that:

the initial interference-plus-noise covariance matrix $\hat{\mathbf{R}}_{nn}$ is Eigen-decomposed into

$$\tilde{\mathbf{R}}_{nn} = \tilde{\mathbf{U}}\tilde{\Sigma}\tilde{\mathbf{U}}^{H},$$

where $\tilde{U}$ is an eigenmatrix, $\tilde{\mathbf{U}}^{H}$ being a conjugate transposed matrix of $\tilde{\mathbf{U}}$, and

$$\Sigma = \mathrm{diag}\left(\lambda_{1}, \lambda_{2}, \cdots, \lambda_{N_{BS}}\right),$$

where $N_{BS}$ is the number of antenna.

According to an interference power determination threshold coefficient $\eta$, the number $\hat{D}$ of the interference signals is determined using the set iterative algorithm.

According to the number $\hat{D}$ of the interference signals, the first $\hat{D}$ (the number of the interference signals) eigenvalues in $\tilde{\Sigma}$ are set to remain unchanged, and the last

$$N_{BS} - \hat{D}$$

eigenvalues are set to be a mean value thereof so as to obtain the corrected diagonal matrix $\tilde{\Sigma}$, thereby obtaining

$$\hat{\mathbf{R}}_{nn} = \tilde{\mathbf{U}}\hat{\Sigma}\tilde{\mathbf{U}}^{H}.$$

Correspondingly, in the above second application scenario of the embodiment, based on the acquired channel

estimation matrix $\hat{\mathbf{H}}$ and interference-plus-noise covariance matrix $\hat{\mathbf{R}}_{nn}$, the signal $\mathbf{y}_{data}$ at the data position received in $\mathbf{y}$ can be detected using the set receiver algorithm by, but not limited to, the following manners to obtain $\hat{\mathbf{s}}_{data}$:

$$\hat{\mathbf{s}}_{data} = \mathbf{W}\,\mathbf{y}_{data}^{p}$$

In the above second application scenario of the embodiment, the step S104 in Fig. 1 of updating the preset pilot symbol $\mathbf{s}_{pilot}$ based on the current estimated value $\hat{\mathbf{s}}_{data}$ of data symbol and updating the preset pilot position signal $\mathbf{y}_{iter}$ based on the signal $\mathbf{y}_{pilot}$ at the pilot position and the signal $\mathbf{y}_{data}$ at the data position can include, but is not limited to, that:
based on the estimated value

$$\hat{\mathbf{s}}_{data}$$

of data symbol, a data symbol is obtained by a hard decision. The preset pilot symbol $\mathbf{s}_{pilot}$ is updated to $\mathbf{s}_{data} = \{\mathbf{s}_{pilot}, \tilde{\mathbf{s}}_{data}\}$, and the preset pilot position signal $\mathbf{y}_{iter}$ is updated to

$$\mathbf{y}_{iter} = \left\{ \mathbf{y}_{pilot}^{p}, \mathbf{y}_{data}^{p} \right\}.$$

In addition, it should be understood that for the above-mentioned first application scenario and second application scenario, the preset iterative detection condition in Fig. 1 can be flexibly set according to specific requirements. For example, in an example, the preset iterative detection condition can include, but is not limited to, that: T times of iterative detection are conducted, where T is a positive integer greater than or equal to 1. For example, T can be set to as 1, 2, 3 or 4, etc. according to the requirements, which can be flexibly determined according to the progress requirements of signal detection.

As can be seen, by using the signal detection method provided by the embodiment, the estimated value of data symbol obtained by the previous detection can be hard-decided in detection iteration by a connection framework combining channel estimation with signal detection, and then the data symbol as a known symbol is subjected to iterative channel estimation in conjunction with a pilot symbol, so that the system performance can be improved by effectively utilizing channel information.

In another aspect, in the above process of iterative reconstruction of the interference-plus-noise covariance matrix, on the one hand, interference noise can be adaptively estimated according to an actual communication scenario, and on the other hand, the calculation complexity and estimation accuracy can be compromised by selecting the interference power determination threshold coefficient $\eta$.

In addition, by projecting the received signal into the subspace and then performing the detection in combination with an iterative detection mechanism provided by the embodiment, the influence of the interference signals on the signal detection result can be comprehensively reduced from several aspects, thereby improving the accuracy of signal detection.

Embodiment 2

The embodiment provides a signal detection apparatus, which can be arranged in a communication device capable of serving as a signal receiving end (which can be a base station or a terminal). Please see Fig. 3, the signal detection apparatus includes, but is not limited to:

an acquisition module 301, arranged to acquire a channel estimation matrix $\hat{\mathbf{H}}$ and an interference-plus-noise covariance matrix $\hat{\mathbf{R}}_{nn}$, where the channel estimation matrix $\hat{\mathbf{H}}$ is obtained by channel estimation based on a preset pilot symbol $\mathbf{s}_{pilot}$ and a preset pilot position signal $\mathbf{y}_{iter}$, and the interference-plus-noise covariance matrix $\hat{\mathbf{R}}_{nn}$ is obtained by iterative reconstruction based on the channel estimation matrix $\hat{\mathbf{H}}$ and the preset pilot position signal $\mathbf{y}_{iter}$. The preset pilot position signal $\mathbf{y}_{iter}$ is a signal $\mathbf{y}_{pilot}$ at a pilot position included in a received signal $\mathbf{y}$;

a detection module 302, arranged to, based on the channel estimation matrix $\hat{\mathbf{H}}$ and the interference-plus-noise covariance matrix $\hat{\mathbf{R}}_{nn}$, detect a signal $\mathbf{y}_{data}$ at a data position included in a received signal $\mathbf{y}$ using a set receiver algorithm to obtain a current estimated value $\hat{\mathbf{s}}_{data}$ of data symbol; and arranged to, after obtaining the current estimated value $\hat{\mathbf{s}}_{data}$ of data symbol and when it is determined according to a preset iterative detection condition that current iterative detection has not been completed, perform the following steps cyclically until it is determined according to the iterative detection condition that the current iterative detection has been completed, and then output a currently obtained newest estimated value $\hat{\mathbf{s}}_{data}$ of data symbol $\hat{\mathbf{s}}_{data}$. The following steps include that:

based on the current estimated value $\hat{\mathbf{s}}_{data}$ of data symbol, the preset pilot symbol $\mathbf{s}_{pilot}$ is updated, and based on the signal $\mathbf{y}_{pilot}$ at the pilot position and the signal $\mathbf{y}_{data}$ at the data position, the preset pilot position signal $\mathbf{y}_{iter}$ is updated;

based on the updated preset pilot symbol $\mathbf{s}_{pilot}$ and the updated preset pilot position signal $\mathbf{y}_{iter}$, a new channel estimation matrix $\hat{\mathbf{H}}$ and interference-plus-noise covariance matrix $\hat{\mathbf{R}}_{nn}$ are acquired, and based on the acquired new channel estimation matrix $\hat{\mathbf{H}}$ and interference-plus-noise covariance matrix $\hat{\mathbf{R}}_{nn}$, $\mathbf{y}_{data}$ at the data position is redetected using the set receiver algorithm to obtain the currently newest estimated value $\hat{\mathbf{s}}_{data}$ of data symbol.

For the above specific processes of acquiring the channel estimation matrix $\hat{\mathbf{H}}$ and the interference-plus-noise covariance matrix $\hat{\mathbf{R}}_{nn}$ by the acquisition module 301 and performing iterative detection by the detection module 302, please see the above embodiments, and they are not described in detail herein. It should be understood that the functions of the acquisition module 301 and the detection module 30 above can be realized by, but not limited to, a processor in the communication device where the signal detection apparatus is located, and the processor can realize the functions by, but not limited to, at least one of devices and chips such as a Digital Signal Processor (DSP), a Field Programmable Gate Array (FPGA) and an Application Specific Integrated Circuit (ASIC).

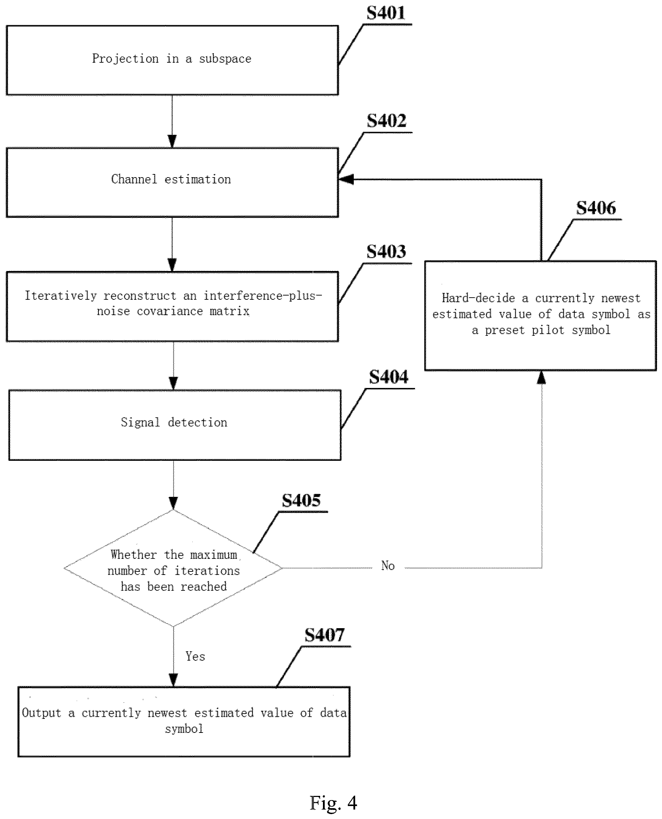

For ease of understanding, the embodiment is illustrated below by taking the signal detection apparatus performing the signal detection process of the second application scenario in the above embodiment as an example (see Fig. 4). The process includes:

S401, a received signal $\mathbf{y}$ is projected into a subspace.

The received signal $\mathbf{y}$ includes a received signal $\mathbf{y}_{pilot}$ at a pilot position and a signal $\mathbf{y}_{data}$ at a data position. Based on the projection in the subspace, the received signal $\mathbf{y}$ is projected into the subspace formed by a set signal to obtain a projected signal $y^p$, which similarly includes a projected signal

$$\mathbf{y}^p_{pilot}$$

at the pilot position and a projected signal

$$\mathbf{y}^p_{data}$$

at the data position.

In the example, the preset iterative detection condition is set to perform T times of iterative detection.

S402: a channel estimation matrix $\hat{\mathbf{H}}$ is acquired.

Channel estimation is conducted using a preset pilot symbol $\mathbf{s}_{pilot}$ and the projected signal

$$\mathbf{y}^p_{pilot}$$

at the pilot position to obtain the channel estimation matrix $\hat{\mathbf{H}}$.

S403: an interference-plus-noise covariance matrix $\hat{\mathbf{R}}_{nn}$ is acquired.

Based on the projected signal

$$\mathbf{y}^p_{pilot}$$

at the pilot position and the channel estimation matrix $\hat{\mathbf{H}}$, the interference-plus-noise covariance matrix $\hat{\mathbf{R}}_{nn}$ is iteratively reconstructed. For example, in an example, an initial interference-plus-noise covariance matrix $\hat{\mathbf{R}}_{nn}$ can be calculated firstly based on the projected signal

$$\mathbf{y}^p_{pilot}$$

at the pilot position and the channel estimation matrix $\hat{\mathbf{H}}$. The initial interference-plus-noise covariance matrix $\hat{\mathbf{R}}_{nn}$ can

be Eigen-decomposed to obtain

$$\tilde{R}_{nn} = \tilde{U}\tilde{\Sigma}\tilde{U}^{H}$$

and

$$\tilde{\Sigma} = \text{diag}\left(\tilde{\lambda}_1, \tilde{\lambda}_2, \cdots, \tilde{\lambda}_{N_{BS}}\right).$$

Where $N_{BS}$ represents the number of antenna at a signal receiving end. An interference power determination threshold coefficient $\eta$ is determined. The number $\hat{D}$ of the interference signals is determined by iteration according to a strategy. The first $\hat{D}$ eigenvalues in $\tilde{\Sigma}$ remain unchanged, and the last

$$N_{BS} - \hat{D}$$

eigenvalues are averaged and they are replaced with the mean value so as to obtain the corrected diagonal matrix $\hat{\tilde{\Sigma}}$, thereby obtaining the interference-plus-noise covariance matrix

$$\hat{R}_{nn} = \tilde{U}\hat{\tilde{\Sigma}}\tilde{U}^{H}.$$

S404: signal detection is conducted.

In the example, based on an IRC receiver algorithm, the signal $y_{data}^p$ is detected using the channel estimation matrix $\hat{H}$ and the interference-plus-noise covariance matrix $\hat{R}_{nn}$ to obtain the currently newest estimated value $\hat{s}_{data}$ of data symbol.

S405: whether the maximum number of iterations has been reached is determined, if yes, proceeding to S407; otherwise, proceeding to S406.

S406: the currently newest estimated value $\hat{s}_{data}$ of data symbol is hard-decided as a preset pilot symbol, proceeding to S402.

Based on the currently newest estimated value $\hat{s}_{data}$ of data symbol, a data symbol

$$\tilde{s}_{data}$$

is obtained by a hard decision according to a modulation constellation diagram.

$$s_{iter} = \left\{s_{pilot}, \tilde{s}_{data}\right\}$$

is used as a new known pilot symbol, and the preset pilot position signal $\mathbf{y}_{iter}$ is updated to

$$y_{iter} = \left\{y_{pilot}^p, y_{data}^p\right\}.$$

to serve as a new pilot position receiving signal.

S407: the currently newest estimated value

$$\hat{s}_{data}$$

of data symbol is output.

In the embodiment, the detected data symbol is hard-decided in iteration by a connection framework combining estimation with detection, and then the data symbol as a known symbol is combined with a pilot symbol to perform iterative channel estimation, so that the system performance is improved by effectively utilizing channel information. Meanwhile, the iteratively reconstructed interference-plus-noise covariance matrix can, on the one hand, adaptively estimate interference noise according to an actual communication scenario, and can on the other hand, compromise the calculation complexity and estimation accuracy by designing the interference power determination threshold coefficient.

For ease of understanding, two specific application examples in the embodiment will be further illustrated below on the basis of the process show in Fig. 4.

Example 1: in the embodiment, the number of single-antenna users on a terminal side is set to be 2, thereby setting $K = 2$; and the number of antenna at a base station terminal is $N_{BS} = 4$, and the value of the maximum number T of detection iteration is set to be 2. In the example, the signal detection process on the terminal side or the base station side includes that:

At step 1, based on projection in a subspace, the received signal $\mathbf{y}$ (containing a received signal $\mathbf{y}_{pilot}$ at a pilot position and a signal $\mathbf{y}_{data}$ at a data position) is projected into the subspace formed by a singular vector corresponding to K maximum singular values to obtain a projected signal $\mathbf{y}^p$. The projected signal $\mathbf{y}^p$ similarly includes a projected signal

$$\mathbf{y}_{pilot}^p$$

at the pilot position and a projected signal

$$\mathbf{y}_{data}^p$$

at the data position.

At step 2, based on the preset pilot symbol $\mathbf{s}_{pilot}$ and the projected signal

$$\mathbf{y}_{pilot}^p$$

at the pilot position, channel estimation is conducted to obtain the channel estimation matrix $\hat{\mathbf{H}}$. Meanwhile, based on the projected signal

$$\mathbf{y}_{pilot}^p$$

at the pilot position and the channel estimation matrix $\hat{\mathbf{H}}$, the interference-plus-noise covariance matrix $\hat{\mathbf{R}}_{nn}$ is iteratively reconstructed. For example,

Based on a strategy selection of the complexity and calculation accuracy of engineering implementation, six resource blocks (RB) can be adopted to averagely calculate $\tilde{\mathbf{R}}_{nn}$ corresponding to each RB. The $\tilde{\mathbf{R}}_{nn}$ is Eigen-decomposed to obtain

$$\tilde{\mathbf{R}}_{nn} = \tilde{U} \tilde{\Sigma} \tilde{U}^H$$

and

$$\tilde{\Sigma} = \text{diag}\left(\tilde{\lambda}_1, \tilde{\lambda}_2, \cdots, \tilde{\lambda}_{N_{BS}}\right),$$

and obviously,

$$\tilde{\lambda}_1 \geq \tilde{\lambda}_2 \geq \cdots \geq \tilde{\lambda}_{N_{BS}}.$$

In the i (i=1, 2,..., $N_{BS}$-1)<th> iteration, $\tilde{\sigma}^2_{(i)}$ is set to be the average noise power calculated in the i<th> iteration. If

$$\tilde{\lambda}_i \geq \eta \cdot \tilde{\sigma}^2_{(N_{BS}-i)},$$

$\hat{D} = N_{BS} - i$ is updated, and iteration is ended; and if

$$\tilde{\lambda}_i < \eta \cdot \tilde{\sigma}^2_{(i-1)}, \qquad \tilde{\sigma}^2_{(i)} = \frac{1}{i} \sum_{j=N_{BS}-i}^{N_{BS}} \tilde{\lambda}_j$$

is updated, and the next iteration is proceeded, and if $i = N_{BS}$ - 1, iteration is ended. The first $\hat{D}$ eigenvalues in $\tilde{\Sigma}$ remain unchanged, and the last $N_{BS}$ - $\hat{D}$ eigenvalues are averaged and they are replaced with the mean value so as to obtain the corrected diagonal matrix $\hat{\tilde{\Sigma}}$, and accordingly, $\hat{\pmb{R}}_{nn} = \tilde{\pmb{U}}\hat{\tilde{\Sigma}}\tilde{\pmb{U}}^H$.

At step 3, based on an IRC receiver algorithm, the signal $\pmb{y}^p_{data}$ is detected according to the channel estimation matrix $\hat{\pmb{H}}$ and the interference-plus-noise covariance matrix

$$\hat{\pmb{s}}_{data}$$

to obtain an estimated value $\hat{\pmb{s}}_{data}$ of data symbol, and the data symbol $\tilde{\pmb{s}}_{data}$ is obtained by a hard decision according to a modulation constellation diagram. If the number of iterations has not reached to T, $\pmb{s}_{pilot} = \{\pmb{s}_{pilot},\tilde{\pmb{s}}\}$ is used as a new known pilot symbol, and

$$\pmb{y}_{iter} = \left\{\pmb{y}^p_{pilot} , \pmb{y}^p_{data}\right\}$$

is used as a new pilot position receiving signal. The steps 2 and 3 are repeated until the maximum number of iterations is reached.

A demodulation threshold corresponding to the block error rate of BLER=0.1 is used as the performance measurement. In the example, the performance of demodulation thresholds at different Modulation and Coding Scheme (MCS) levels is shown in Table 1 below.

Table 1

| MCS level | Demodulation threshold of MRC receiver (dB) | Demodulation threshold in the example (dB) |
|---|---|---|
| 4 | 3.854 | 3.894 |
| 6 | 8.373 | 7.757 |
| 8 | 14.6 | 11.694 |
| 14 | Inf | 23.267 |

In the above table, Inf indicates that BLER cannot drop to 0.1 and below. As can be seen from Table 1 above, as the MCS level increases, the performance advantage of this example over a maximum ratio combing (MRC) receiver becomes more and more obvious. When the MCS level is higher than 12, the MRC receiver cannot reach a required operating point, but this example can still achieve good performance.

Example 2: in the embodiment, the number of single-antenna users on a terminal side is still set to be 2, thereby setting $K$ = 2; and the number of antenna at a base station terminal is

$$N_{BS} = 4,$$

and the value of the maximum number T of detection iteration is set to be 2. In the example, the signal detection process on the terminal side or the base station side includes that:

At step 1, based on projection in a subspace, the received signal **y** (containing a received signal $\pmb{y}_{pilot}$ at a pilot position and a signal $\pmb{y}_{data}$ at a data position) is projected into the subspace formed by a singular vector corresponding to K maximum singular values to obtain a projected signal $y^p$. The projected signal $y^p$ similarly includes a projected signal

$$\mathbf{y}_{pilot}^{p}$$

at the pilot position and a projected signal $\mathbf{y}_{data}^{p}$ at the data position.

At step 2, based on the preset pilot symbol $\mathbf{s}_{pilot}$ and the projected signal $\mathbf{y}_{pilot}^{p}$ at the pilot position, channel estimation is conducted to obtain the channel estimation matrix $\hat{\mathbf{H}}$. Meanwhile, based on the projected signal $\mathbf{y}_{pilot}^{p}$ at the pilot position and the channel estimation matrix $\hat{\mathbf{H}}$, the interference-plus-noise covariance matrix $\hat{\mathbf{R}}_{nn}$ is iteratively reconstructed.

For example, the MCS level is fixed to be 8. The numbers of RBs are adopted as respectively 1, 2, 3, 6, 11, 22, 33 and 66. $\tilde{\mathbf{R}}_{nn}$ corresponding to each RB is calculated by averaging. The $\tilde{\mathbf{R}}_{nn}$ is Eigen-decomposed to obtain

$$\tilde{\mathbf{R}}_{nn} = \tilde{\mathbf{U}} \tilde{\mathbf{\Sigma}} \tilde{\mathbf{U}}^{H}$$

and

$$\tilde{\mathbf{\Sigma}} = \mathrm{diag}\left(\tilde{\lambda}_1, \tilde{\lambda}_2, \cdots, \tilde{\lambda}_{N_{BS}}\right),$$

and obviously,

$$\tilde{\lambda}_1 \geq \tilde{\lambda}_2 \geq \cdots \geq \tilde{\lambda}_{N_{BS}}.$$

In the i (i=1, 2,..., $N_{BS}$-1)<th> iteration,

$$\tilde{\sigma}_{(i)}^{2}$$

is set to be average noise power calculated in the i<th> iteration. If

$$\tilde{\lambda}_i \geq \eta \cdot \tilde{\sigma}_{(i-1)}^{2},$$

$\hat{D} = N_{BS} - i$ is updated, and iteration is ended; and if

$$\tilde{\lambda}_i < \eta \cdot \tilde{\sigma}_{(i-1)}^{2},$$

,

$$\tilde{\sigma}_{(i)}^{2} = \frac{1}{i} \sum_{j=N_{BS}-i}^{N_{BS}} \tilde{\lambda}_j$$

is updated, and the next iteration is proceeded, and if $i = N_{BS} - 1$, iteration is ended. The first $\hat{D}$ eigenvalues in $\tilde{\mathbf{\Sigma}}$ remain unchanged, and the last $N_{BS} - \hat{D}$ eigenvalues are averaged and they are replaced with the mean value so as to obtain the corrected diagonal matrix $\tilde{\mathbf{\Sigma}}$, and accordingly, $\hat{\mathbf{R}}_{nn} = \tilde{\mathbf{U}} \tilde{\mathbf{\Sigma}} \tilde{\mathbf{U}}^{H}$.

At step 3, based on an IRC receiver algorithm, the signal $\mathbf{y}_{data}^{p}$ is detected according to the channel estimation matrix $\hat{\mathbf{H}}$ and the interference-plus-noise covariance matrix $\hat{\mathbf{R}}_{nn}$ to obtain an estimated value $\hat{\mathbf{s}}_{data}$ of data symbol, and

the data symbol $\tilde{s}_{\text{data}}$ is obtained by a hard decision according to a modulation constellation diagram. If the number of iterations has not reached to T,

$$\mathbf{s}_{pilot} = \left\{ \mathbf{s}_{pilot}, \tilde{\mathbf{s}} \right\}$$

is used as a new known pilot symbol, and

$$\boldsymbol{y}_{iter} = \left\{ \boldsymbol{y}_{pilot}^{p}, \boldsymbol{y}_{data}^{p} \right\}$$

is used as a new pilot position receiving signal. The steps 2 and 3 are repeated until the maximum number of iterations is reached.

A demodulation threshold corresponding to the block error rate of BLER=0.1 is used as the performance measurement. In the example, the performance of demodulation thresholds at different numbers of RBs is shown in Table 2 below.

Table 2

| The number of RB | Demodulation threshold of MRC receiver (dB) | Demodulation threshold in the example (dB) |
|---|---|---|
| 1 | 14.417 | 14.781 |
| 2 | 14.25 | 12.041 |
| 3 | 13.576 | 11.387 |
| 6 | 14.6 | 11.694 |
| 11 | 15.026 | 11.949 |
| 22 | 14.474 | 12.298 |
| 33 | 14.962 | 12.515 |
| 66 | 16 | 13.458 |

As can be seen from Table 2 above, in the Example 2, when the number of RBs is greater than 1, this example has a significant performance advantage over the MRC receiver; and when the number of RBs is 3, this example can achieve optimal performance. However, when the number of RBs continues increasing, the performance decreases due to differences in distribution of interference. Therefore, an appropriate number of RBs can be selected according to the complexity and accuracy.

Embodiment 3

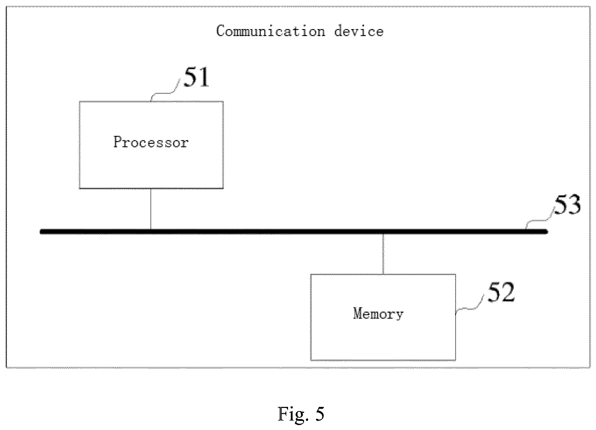

The embodiment also provides a communication device. As shown above, the communication device can be a terminal on a user side, and can also be, but is not limited to, a base station on a network side. As shown in Fig. 5, the communication device includes a processor 51, a memory 52 and a communication bus 53.

The communication bus 53 is arranged to implement connection communication between the processor 51 and the memory 52;

The processor 51 is arranged to execute one or more computer programs stored in the memory 52, so as to implement at least one of the steps of the signal detection method in the above embodiments.

The embodiment also provides a computer readable storage medium. The computer readable storage medium includes volatile and non-volatile, removable and non-removable media that may be implemented in any method or technology for storing information. The computer readable storage medium includes, but is not limited to, a Random Access Memory (RAM), a Read-Only Memory (ROM), an Electrically Erasable Programmable Read Only Memory (EEPROM), a flash memory or other memory technologies, a Compact Disc Read-Only Memory (CD-ROM), a Digital Video Disk (DVD) or other optical disk storage, a magnetic cassette, a magnetic tape, a magnetic disk storage or other magnetic storage devices, or any other media which can be used to store desired information and which can be accessed by a computer.

The computer readable storage medium in the embodiment can be used for storing one or more the computer programs which can be executed by the processor, so as to implement at least one of the steps of the signal detection method in the above embodiments.

As can be seen, those skilled in the art should understand that, all or some steps of the methods and functional modules/units of a system or a device disclosed above may be implemented as software (which can be implemented by a computer program code that can be executed by a computing device), firmware, hardware, and a proper combination thereof. In an implementation of the hardware, a division of the functional modules/units mentioned above does not necessarily correspond to a division of physical components. For example, one physical component may have multiple functions, or one function or step may be implemented by multiple physical components cooperatively. Some components or all components may be implemented as software executed by a processor, such as a central processing unit, a digital signal processor or a microprocessor, or may be implemented as hardware, or may be implemented as an integrated circuit, such as an application specific integrated circuit.

In addition, as is known to a person of ordinary skill in the art, the communications medium usually includes the computer readable instruction, the data structure, and the computer program module or other data in a modulated data signal, such as a carrier or other transmission mechanisms, and can include any information delivery medium. Therefore, the invention is not limited to any specific combination of hardware and software.

The above disclosure is further detailed descriptions of the embodiments of the present invention in conjunction with specific implementations, and it cannot be considered that the specific implementations of the present invention are limited only to these descriptions. For a person of ordinary skill in the art of the invention, without departing from the concept of the invention, several simple deductions or substitutions can further be made, and all of which should be regarded as falling within the protection scope of the invention.

**Claims**

1.  A signal detection method, comprising:

    conducting channel estimation based on a preset pilot symbol $\mathbf{s}_{pilot}$ and a preset pilot position signal $\mathbf{y}_{iter}$ to obtain a channel estimation matrix $\hat{\mathbf{H}}$, wherein the preset pilot position signal $\mathbf{y}_{iter}$ is a signal $\mathbf{y}_{pilot}$ at a pilot position included in a received signal $\mathbf{y}$;
    conducting iterative reconstruction based on the channel estimation matrix $\hat{\mathbf{H}}$ and the preset pilot position signal $\mathbf{y}_{iter}$ to obtain an interference-plus-noise covariance matrix $\hat{\mathbf{R}}_{nn}$;
    detecting a signal $\mathbf{y}_{data}$ at a data position included in the received signal $\mathbf{y}$ based on the channel estimation matrix $\hat{\mathbf{H}}$ and the interference-plus-noise covariance matrix $\hat{\mathbf{R}}_{nn}$ to obtain a current estimated value $\hat{\mathbf{s}}_{data}$ of data symbol;
    after obtaining the current estimated value $\hat{\mathbf{s}}_{data}$ of data symbol and when it is determined according to a preset iterative detection condition that current iterative detection has not been completed, performing the following steps cyclically until it is determined according to the iterative detection condition that the current iterative detection has been completed, and then outputting a currently obtained newest estimated value $\hat{\mathbf{s}}_{data}$ of data symbol,
    updating the preset pilot symbol $\mathbf{s}_{pilot}$ based on the current estimated value $\hat{\mathbf{s}}_{data}$ of data symbol, and updating the preset pilot position signal $\mathbf{y}_{iter}$ based on the signal $\mathbf{y}_{pilot}$ at the pilot position and the signal $\mathbf{y}_{data}$ at the data position;
    acquiring a new channel estimation matrix $\hat{\mathbf{H}}$ and the interference-plus-noise covariance matrix $\hat{\mathbf{R}}_{nn}$ based on the updated preset pilot symbol $\mathbf{s}_{pilot}$ and the updated preset pilot position signal $\mathbf{y}_{iter}$; and redetecting the signal $\mathbf{y}_{data}$ at the data position using a set receiver algorithm to obtain a currently newest estimated value $\hat{\mathbf{s}}_{data}$ of data symbol based on the acquired new channel estimation matrix $\hat{\mathbf{H}}$ and the interference-plus-noise covariance matrix $\hat{\mathbf{R}}_{nn}$.

2.  The signal detection method according to claim 1,
    wherein conducting channel estimation to obtain a channel estimation matrix $\hat{\mathbf{H}}$ based on a preset pilot symbol $\mathbf{s}_{pilot}$ and a preset pilot position signal $\mathbf{y}_{iter}$ comprises:

    using a pilot position projected signal

    $$\mathbf{y}^{p}_{pilot}$$

    obtained by projecting the signal $\mathbf{y}_{pilot}$ at the pilot position included in the received signal $\mathbf{y}$ into a set subspace as the preset pilot position signal $\mathbf{y}_{iter}$, and conducting channel estimation based on the preset pilot position signal $\mathbf{y}_{iter}$ and the preset pilot symbol $\mathbf{s}_{pilot}$ to obtain the channel estimation matrix $\hat{\mathbf{H}}$;
conducting iterative reconstruction based on the channel estimation matrix $\hat{\mathbf{H}}$ and the pilot position projected signal

$$\mathbf{y}_{pilot}^{p}$$

to obtain the interference-plus-noise covariance matrix $\hat{\mathbf{R}}_{nn}$ comprises:
conducting iterative reconstruction based on the channel estimation matrix $\hat{\mathbf{H}}$ and the pilot position projected signal

$$\mathbf{y}_{pilot}^{p}$$

to obtain the interference-plus-noise covariance matrix $\hat{\mathbf{R}}_{nn}$.

3. The signal detection method according to claim 2,
wherein detecting the signal $\mathbf{y}_{data}$ at the data position included in the received signal $\mathbf{y}$ based on the channel estimation matrix $\hat{\mathbf{H}}$ and the interference-plus-noise covariance matrix $\hat{\mathbf{R}}_{nn}$ comprises:
based on the channel estimation matrix $\hat{\mathbf{H}}$ and the interference-plus-noise covariance matrix $\hat{\mathbf{R}}_{nn}$, by using the receiver algorithm, detecting a data position projected signal

$$\mathbf{y}_{data}^{p}$$

obtained by projecting the signal $\mathbf{y}_{data}$ at the data position included in the received signal $\mathbf{y}$ into a set subspace.

4. The signal detection method according to claim 2,
wherein conducting iterative reconstruction based on the channel estimation matrix $\hat{\mathbf{H}}$ and the pilot position projected signal

$$\mathbf{y}_{pilot}^{p}$$

to obtain the interference-plus-noise covariance matrix $\hat{\mathbf{R}}_{nn}$ comprises:

calculating an initial interference-plus-noise covariance matrix $\tilde{\mathbf{R}}_{nn}$ based on the channel estimation matrix $\hat{\mathbf{H}}$ and the pilot position projected signal

$$\mathbf{y}_{pilot}^{p};$$

eigen-decomposing the initial interference-plus-noise covariance matrix

$$\tilde{\mathbf{R}}_{nn},$$

and according to an interference power determination threshold coefficient $\eta$, by using a set iterative algorithm, correcting eigenvalues in a diagonal matrix $\tilde{\Sigma}$ obtained after eigen-decomposing the

$$\tilde{\mathbf{R}}_{nn}$$

to obtain the interference-plus-noise covariance matrix $\hat{\mathbf{R}}_{nn}$;

the interference power determination threshold coefficient $\eta$ is a positive real number greater than 0.

5. The signal detection method according to claim 4,
   wherein eigen-decomposing the initial interference-plus-noise covariance matrix

$$\tilde{\mathbf{R}}_{nn,i}$$

and according to an interference power determination threshold coefficient $\eta$, by using a set iterative algorithm, correcting eigenvalues in a diagonal matrix $\tilde{\Sigma}$ obtained after eigen-decomposing the $\hat{\mathbf{R}}_{nn}$ to obtain the interference-plus-noise covariance matrix $\hat{\mathbf{R}}_{nn}$ comprises:

eigen-decomposing the initial interference-plus-noise covariance matrix $\hat{\mathbf{R}}_{nn}$ into

$$\tilde{\mathbf{R}}_{nn} = \tilde{\mathbf{U}}\,\tilde{\Sigma}\,\tilde{\mathbf{U}}^{H},$$

wherein U is an eigenmatrix, $\tilde{\mathbf{U}}^{H}$ is a conjugate transposed matrix of $\tilde{\mathbf{U}}$, and

$$\Sigma = \mathrm{diag}\left(\lambda_1, \lambda_2, \cdots, \lambda_{N_{BS}}\right),$$

and $N_{BS}$ is the number of antenna;
determining a number $\hat{D}$ of interference signals according to the interference power determination threshold coefficient $\eta$ using the set iterative algorithm;
setting the first $\hat{D}$ eigenvalues in the $\tilde{\Sigma}$ to remain unchanged, $\hat{D}$ being the number of the interference signals, and setting the last $N_{BS} - \hat{D}$ eigenvalues to be a mean value of the last $N_{BS} - \hat{D}$ eigenvalues so as to obtain a corrected diagonal matrix $\tilde{\Sigma}$, thereby obtaining

$$\hat{\mathbf{R}}_{nn} = \tilde{\mathbf{U}}\,\hat{\Sigma}\,\tilde{\mathbf{U}}^{H}.$$

6. The signal detection method according to any one of claims 2 to 5,
   wherein updating the preset pilot symbol $\mathbf{s}_{pilot}$ based on the current estimated value $\hat{\mathbf{s}}_{data}$ of data symbol, and updating the preset pilot position signal $\mathbf{y}_{iter}$ based on the signal $\mathbf{y}_{pilot}$ at the pilot position and the signal $\mathbf{y}_{data}$ at the data position comprises:
   hard-deciding the estimated value $\hat{\mathbf{s}}_{data}$ of data symbol to obtain a data symbol $\hat{\mathbf{s}}_{data}$, updating the preset pilot symbol

$\mathbf{s}_{pilot}$ to $\mathbf{s}_{pilot} = \{\mathbf{s}_{pilot}, \tilde{\mathbf{s}}_{data}\}$; and updating the preset pilot position signal $\mathbf{y}_{iter}$ to $\mathbf{y}_{iter} = \left\{\mathbf{y}_{pilot}^{p}, \mathbf{y}_{data}^{p}\right\}$.

7. The signal detection method according to any one of claims 1 to 5,
   wherein the iterative detection condition comprises:
   conducting T times of iterative detection, and wherein the T is a positive integer being greater than or equal to 1.

8. The signal detection method according to any one of claims 2 to 5,
   wherein the set subspace comprises: a subspace formed by a singular vector corresponding to K maximum singular values, K being a positive integer greater than or equal to the number N of data streams sent by a signal sending end.

9. A signal detection apparatus, comprising:

an acquisition module, arranged to conduct channel estimation based on a preset pilot symbol $\mathbf{s}_{pilot}$ and a preset pilot position signal $\mathbf{y}_{iter}$ to obtain a channel estimation matrix $\hat{\mathbf{H}}$, and conduct iterative reconstruction based on the channel estimation matrix $\hat{\mathbf{H}}$ and the preset pilot position signal $\mathbf{y}_{iter}$ to obtain an interference-plus-noise

covariance matrix $\hat{\mathbf{R}}_{nn}$, the preset pilot position signal $\mathbf{y}_{iter}$ is a signal $\mathbf{y}_{pilot}$ at a pilot position included in a received signal $\mathbf{y}$;

a detection module, arranged to detect a signal $\mathbf{y}_{data}$ at a data position included in the received signal $\mathbf{y}$ based on the channel estimation matrix $\hat{\mathbf{H}}$ and the interference-plus-noise covariance matrix $\hat{\mathbf{R}}_{nn}$ to obtain a current estimated value $\hat{\mathbf{s}}_{data}$ of data symbol; and arranged to, after obtaining the current estimated value $\hat{\mathbf{s}}_{data}$ of data symbol and when it is determined according to a preset iterative detection condition that current iterative detection has not been completed, perform the following steps cyclically until it is determined according to the iterative detection condition that the current iterative detection has been completed, and then output a currently obtained newest estimated value $\hat{\mathbf{s}}_{data}$ of data symbol:

updating the preset pilot symbol $\mathbf{s}_{pilot}$ based on the current estimated value $\hat{\mathbf{s}}_{data}$ of data symbol and updating the preset pilot position signal $\mathbf{y}_{iter}$ based on the signal $\mathbf{y}_{pilot}$ at the pilot position and the signal $\mathbf{y}_{data}$ at the data position;

based on the updated preset pilot symbol $\mathbf{s}_{pilot}$ and the updated preset pilot position signal $\mathbf{y}_{iter}$, acquiring a new channel estimation matrix $\hat{\mathbf{H}}$ and the interference-plus-noise covariance matrix $\hat{\mathbf{R}}_{nn}$; and based on the acquired new channel estimation matrix $\hat{\mathbf{H}}$ and the interference-plus-noise covariance matrix $\hat{\mathbf{R}}_{nn}$, re-detecting the signal $\mathbf{y}_{data}$ at the data position using a set receiver algorithm to obtain a currently newest estimated value $\hat{\mathbf{s}}_{data}$ of data symbol.

10. A communication device, comprising: a processor and a memory;
wherein the processor is arranged to execute one or more programs stored in the memory, so as to implement steps of the signal detection method according to any one of claims 1 to 8.

11. A computer storage medium for storing one or more programs, wherein the one or more programs can be executed by one or more processors so as to implement steps of the signal detection method according to any one of claims 1 to 8.

S101

Based on a preset pilot symbol and a preset pilot position signal, calculate a channel estimation matrix and an interference-plus-noise covariance matrix

S102

Based on the channel estimation matrix and the interference noise covariance matrix, detect a signal at a data position included in a received signal using a set receiver algorithm

S105

S103

Whether iterative detection is completed

Yes → Output a currently obtained newest estimated value of data symbol

No

S104

update the preset pilot symbol based on an current estimated value of data symbol and update the preset pilot position signal based on the signal at the data position and a signal at a pilot position included in the received signal,

Fig. 1

Based on the channel estimation matrix and a pilot position projected signal, calculate an initial interference-plus-noise covariance matrix
S201

Eigen-decompose the initial interference noise covariance matrix, and correct eigenvalues in a diagonal matrix obtained after eigen-decomposition using a set iterative algorithm according to an interference power determination threshold coefficient to obtain the interference-plus-noise covariance matrix
S202

Fig. 2

Signal detection apparatus

Acquisition module
**301**

Detection module
**302**

Fig. 3

**S401**
Projection in a subspace

**S402**
Channel estimation

**S403**
Iteratively reconstruct an interference-plus-noise covariance matrix

**S404**
Signal detection

**S405**
Whether the maximum number of iterations has been reached

No

**S406**
Hard-decide a currently newest estimated value of data symbol as a preset pilot symbol

Yes

**S407**
Output a currently newest estimated value of data symbol

Fig. 4

Communication device

51

Processor

53

52

Memory

Fig. 5

## INTERNATIONAL SEARCH REPORT

| International application No. |
|---|
| **PCT/CN2020/126453** |

| A. | CLASSIFICATION OF SUBJECT MATTER |
|---|---|
| | H04L 25/02(2006.01)i |

According to International Patent Classification (IPC) or to both national classification and IPC

| B. | FIELDS SEARCHED |
|---|---|

Minimum documentation searched (classification system followed by classification symbols)

H04L H04W H04B

Documentation searched other than minimum documentation to the extent that such documents are included in the fields searched

Electronic data base consulted during the international search (name of data base and, where practicable, search terms used)

WPI, EPODOC, CNPAT, CNKI: 信道估计矩阵, 信道, 估计, 噪声协方差矩阵, 噪声, 协方差, 矩阵, 导频, 迭代, 递归, 更新, 最新, channel, estimate, noise, covariance, matrix, pilot, iterative, recursion, update, new

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 102932290 A (HEFEI XINCOMM COMMUNICATIONS CO., LTD.) 13 February 2013 (2013-02-13)<br>    description, paragraphs [0012]-[0058] | 1-11 |
| A | CN 102480444 A (ZTE CORPORATION) 30 May 2012 (2012-05-30)<br>    entire document | 1-11 |
| A | CN 103379055 A (ZTE CORPORATION) 30 October 2013 (2013-10-30)<br>    entire document | 1-11 |
| A | US 2009239474 A1 (TELEFONAKTIEBOLAGET LM ERICSSON (PUBL)) 24 September 2009 (2009-09-24)<br>    entire document | 1-11 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **09 December 2020** | **28 January 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/126453**

| Patent document cited in search report | | | Publication date (day/month/year) | Patent family member(s) | | | Publication date (day/month/year) |
|---|---|---|---|---|---|---|---|
| CN | 102932290 | A | 13 February 2013 | None | | | |
| CN | 102480444 | A | 30 May 2012 | WO | 2012068858 | A1 | 31 May 2012 |
| CN | 103379055 | A | 30 October 2013 | None | | | |
| US | 2009239474 | A1 | 24 September 2009 | WO | 2009116910 | A1 | 24 September 2009 |
| | | | | EP | 2258052 | A1 | 08 December 2010 |
| | | | | AT | 515838 | T | 15 July 2011 |
| | | | | IN | 201006507 | P1 | 29 July 2011 |

Form PCT/ISA/210 (patent family annex) (January 2015)